# EUROPÄISCHE PATENTANMELDUNG

(11) **EP 1 004 500 A2**
(43) Veröffentlichungstag der Anmeldung: **31.05.2000**
(21) Anmeldenummer: 99116271.0
(22) Anmeldetag: 18.08.1999
(51) Int. Cl.: B62J 1/06, B62J 1/08

(54) **Sattelstütze für Zweiräder**

(30) Priorität: 02.09.1998 DE 19839934
(71) Anmelder: Neumann, Winfried, 85649 Brunnthal (DE)
(72) Erfinder: Neumann, Winfried, 85649 Brunnthal (DE)
(74) Vertreter: Munk, Ludwig, Dipl.-Ing.

(57) **Zusammenfassung**

Bei einer Sattelstütze für Zweiräder, insbesondere Fahrräder, mit einem am Fahrzeugrahmen (3) festlegbaren Unterteil (5) und einem teleskopartig in dieses eingreifenden, einen Sattel (1) tragenden Oberteil (6) das gegenüber dem Unterteil (5) gegen Verdrehen gesichert und in axialer Richtung mittels einer im Unterteil (5) angeordneten Druckfedereinrichtung (12) abgefedert ist, lassen sich dadurch ein hoher Fahrkomfort und eine hohe Sicherheit gewährleisten, dass wenigstens eine parallel zur Druckfedereinrichtung (12) wirksame Dämpfungseinrichtung (15) vorgesehen ist.

## Beschreibung

Die Erfindung betrifft eine Sattelstütze für Zweiräder, insbesondere Fahrräder, mit einem am Fahrzeugrahmen festlegbaren Unterteil und einem teleskopartig in dieses eingreifenden, einen Sattel tragenden Oberteil, das gegenüber dem Unterteil gegen Verdrehen gesichert und in axialer Richtung mittels einer im Unterteil angeordneten Druckfedereinrichtung abgefedert ist.

Eine Sattelstütze dieser Art ist aus der DE 195 29 729 A1 bekannt. Bei dieser bekannten Anordnung ist zwischen Oberteil und Unterteil lediglich eine Federung vorgesehen. Im Falle eines Stoßes kommt es daher zu einer praktisch ungedämpften Schwingung. Die Folge davon sind ein langes Nachschwingen sowie im Falle eines starken Stoßes ein vergleichsweise starker Rückstoß. Im Falle eines besonders starken Stoßes kann es auch zu einem Durchschlagen, das heißt zu einem Auflaufen des Oberteils auf einen festen Anschlag kommen. Diese Nachteile beeinträchtigen den Fahrkomfort, was auch die Sicherheit beeinträchtigen kann. Dies gilt insbesondere für geländegängige Fahrzeuge, wie sogenannte Mountainbikes etc., da hierbei mit tiefen Schlaglöchern zu rechnen ist, die zu starken Stößen auf die Sattelstütze führen können.

Hiervon ausgehend ist es daher die Aufgabe der vorliegenden Erfindung, eine Anordnung eingangs erwähnter Art mit einfachen und kostengünstigen Mitteln so zu verbessern, dass ein hoher Fahrkomfort und eine hohe Sicherheit gewährleistet sind.

Diese Aufgabe wird erfindungsgemäß dadurch gelöst, dass wenigstens eine parallel zur Druckfedereinrichtung wirksame Dämpfungseinrichtung vorgesehen ist.

Mit diesen Maßnahmen werden die eingangs geschilderten Nachteile des gattungsgemäßen Standes der Technik vollständig beseitigt. Durch die zur Federung parallel wirksame Dämpfungseinrichtung werden stärkere Stöße so gedämpft, dass ein Durchschlagen bzw. ein starker Rückstoß und ein Nachschwingen der Federeinrichtung unterbleiben. Dies ergibt einen hohen Fahrkomfort, was sich auch vorteilhaft auf die Vermeidung von Unfällen auswirkt.

Vorteilhafte Ausgestaltungen und zweckmäßige Fortbildungen der übergeordneten Maßnahmen sind in den Unteransprüchen angegeben. So kann die Dämpfungseinrichtung zweckmäßig als Flüssigkeitsverdrängungseinrichtung ausgebildet sein, die einen eine Flüssigkeitsfüllung enthaltenden Zylinderraum und eine diesen in zwei gegenläufig vergrößer- bzw. verkleinerbare Kammern unterteilende Verdrängeranordnung aufweist, der wenigstens eine Drosselverbindung zwischen den beiden Kammern zugeordnet ist. Diese Maßnahmen ergeben eine sehr robuste Anordnung mit hoher Funktionssicherheit und Lebensdauer.

Zweckmäßig kann die Dämpfungseinrichtung innerhalb der aus Unter- und Oberteil bestehenden Teleskopanordnung angeordnet sein. Dies ergibt eine geschützte Unterbringung der Dämpfungseinrichtung, was sich vorteilhaft auf die Funktionssicherheit auswirkt, und führt gleichzeitig zu einer kompakten, ästhetisch ansprechenden Anordnung.

In weiterer Fortbildung dieses Gedankens können der eine Flüssigkeitsfüllung enthaltende Zylinderraum im Oberteil angeordnet und die Verdrängeranordnung auf einer am Unterteil befestigten, teleskopartig in das Oberteil eingreifenden Stange aufgenommen sein. Dies ergibt eine besonders einfache und kompakte Bauweise. Gleichzeitig wird hierdurch sichergestellt, dass die Druckfedereinrichtung zur Abfederung des Oberteils gegenüber dem Unterteil im Unterteil angeordnet sein kann, so dass der Überstand des Oberteils gegenüber dem Unterteil lediglich dem maximalen Federweg entsprechen muss und dementsprechend vergleichsweise klein sein kann, was sich vorteilhaft auf die auftretende Biegebeanspruchung und dementsprechend die Funktionssicherheit auswirkt.

Eine weitere, besonders zu bevorzugende Maßnahme kann darin bestehen, dass der der Verdrängeranordnung gegenüberliegende Stirnseitenverschluss im Falle einer Stoßbeanspruchung verkleinerbaren Kammer als im Oberteil entgegen der Kraft einer Rückstellfeder verschiebbarer Kolben ausgebildet ist. Dies ergibt eine besonders sanfte Dämpfungswirkung und damit einen besonders hohen Fahrkomfort.

Vorteilhaft kann die Verdrängeranordnung eine aus gummielastischem Material bestehende, scheibenförmige Membrane aufweisen. Diese kann sich unter der Wirkung des anstehenden Flüssigkeitsdrucks in vorteilhafter Weise so verformen, dass sich ein randseitiger, eine Drosselwirkung erzeugender Durchlassspalt ergibt. Zusätzliche Maßnahmen zur Bildung eines Drosseldurchlasses sind daher in vorteilhafter Weise nicht erforderlich. Vielmehr ergeben die genannten Maßnahmen praktisch eine Selbststeuerung der Drosselwirkung in Abhängigkeit von den wirksamen Kräften.

Zweckmäßig kann die Membrane zwischen zwei Scheiben eingespannt sein, wobei ein diese in radialer Richtung überragender Rand vorgesehen ist. Die Scheiben ergeben eine Stabilisierung der radial inneren Bereiche der Membrane, so dass diese vergleichsweise dünn sein kann, was sich vorteilhaft auf die erwünschte Selbststeuerung auswirkt. Durch unterschiedliche Scheibendurchmesser lassen sich dabei in vorteilhafter Weise unterschiedliche Dämpfungswirkungen erreichen. Zweckmäßig besitzt die bei der Stoßdämpfung in Bewegungsrichtung hintere Scheibe einen größeren Durchmesser als die gegenüberliegende Scheibe. Hierdurch wird erreicht, dass eine in Folge eines Stoßes erfolgende Auslenkung der Druckfederanordnung stärker gedämpft wird, als die Rückstellbewegung, wodurch erreicht wird, dass die gesamte Anordnung sehr schnell die Ausgangslage wieder erreicht.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: einen Längsschnitt durch eine erfindungsgemäße Sattelstütze,
- Figur 2: eine vergrößerte Darstellung der Verdrängeranordnung der Anordnung gemäß Figur 1 und
- Figur 3: eine Variante zu Figur 2.

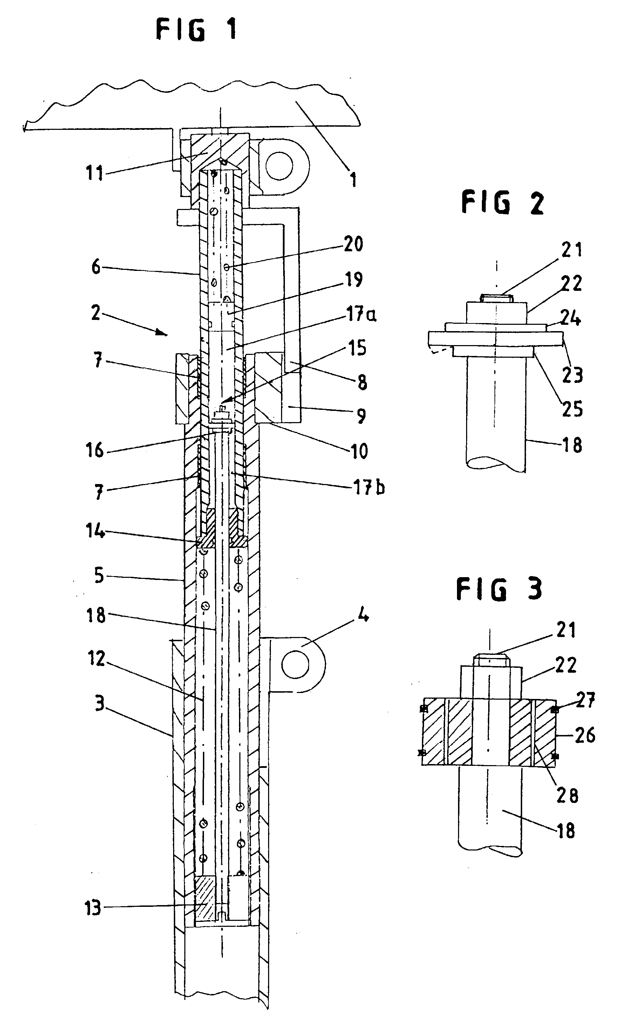

Zweiräder, wie Fahrräder etc., besitzen einen in Figur 1 lediglich schematisch angedeuteten Sattel 1, der über eine als ganzes mit 2 bezeichnete Sattelstange in der Höhe verstellbar am Fahrzeugrahmen 3 festlegbar ist. Hierzu ist in der Regel eine schellenartige Klemmeinrichtung 4 vorgesehen. Die Sattelstütze 2 besteht aus zwei teleskopartig zusammenwirkenden Teilen, nämlich einem in ein zugeordnetes Aufnahmerohr des Fahrzeugrahmens 3 einsteckbaren und mittels der Klemmeinrichtung 4 hieran festlegbaren Unterteil 5 und einem verschiebbar in dieses eingreifenden Oberteil 6, das den Sattel 1 trägt. Zur Führung des Oberteils 6 im Unterteil 5 sind zwei in dieses eingepresste, voneinander distanzierte Führungsbuchsen 7 vorgesehen, die zweckmäßig aus einem selbstschmierenden Material, vorzugsweise Kunststoff, bestehen können.

In Drehrichtung ist das Oberteil 6 gegenüber dem Unterteil 5 blockiert. Hierzu ist das Oberteil 6 mit einem außen liegenden, achsparallen Führungsriegel 8 versehen, der in eine zugeordnete Führungsnut 9 eines am Unterteil 5 befestigten Führungsteils 10 eingreift. Der Führungsriegel 8 ist an einem auf einen Rohrabschnitt des Oberteils 6 kappenförmig aufgesetzten Aufsatz 11 befestigt, der einen Zapfen zur Aufnahme des Sattels 1 bildet, der in an sich bekannter Weise mittels einer schellenartigen Klemmeinrichtung hieran festlegbar ist.

Das Oberteil 6 ist über eine im rohrförmigen Unterteil angeordnete Druckfedereinrichtung 12 gegenüber dem Unterteil 5 abgefedert. Die Druckfedereinrichtung 12 kann eine oder mehrere, hintereinander angeordnete Spiraldruckfedern aufweisen. Die die Druckfedereinrichtung 12 bildende Federanordnung liegt mit ihrem unteren Ende an einem von unten in das dem Unterteil 5 zugrundeliegende Rohr einschraubbaren, pfropfenartigen Federteller 13 an. Durch Verstellung dieses Federtellers 13 lässt sich die gewünschte Vorspannung der Federanordnung einstellen. Das obere Ende der Federanordnung liegt an einem am unteren Ende eines dem Oberteil 6 zugrundeliegenden Rohrs vorgesehenen Federteller 14 an. Dieser ist als Flansch eines in das dem Oberteil 6 zugrundeliegende Rohr eingesetzten Zapfens ausgebildet und bildet mit diesem einen unteren Stirnseitenverschluss des Innenraums des dem Oberteil 6 zugrundeliegenden Rohrs.

Zur Dämpfung von Stößen ist eine parallel zur Druckfedereinrichtung 12 wirksame Dämpfungseinrichtung 15 vorgesehen, die wie die Druckfedereinrichtung 12 innerhalb der aus Unterteil 5 und Oberteil 6 bestehenden Teleskopanordnung angeordnet ist. Hierzu ist im Oberteil 6 ein Zylinderraum vorgesehen, der mit einer Flüssigkeitsfüllung, zweckmäßig mit einer Ölfüllung, versehen ist und durch eine fest mit dem Unterteil 5 verbundene Verdrängeranordnung 16 in zwei gegenläufig verkleinerbare bzw. vergrößerbare Kammern 17a, 17b unterteilt ist. Die Strömung zwischen den Kammern 17a, b erfolgt über wenigstens einen Drosseldurchlass, auf den weiter unten noch näher eingegangen wird. Die Dämpfungseinrichtung 16 ist hier ersichtlich als robuste Flüssigkeitsverdrängungseinrichtung ausgebildet.

Die Verdrängeranordnung 16 ist am oberen Ende einer den durch den oberen Federteller 14 der Druckfedereinrichtung 12 gebildeten, unteren Stirnseitenverschluss des Oberteils 6 durchsetzenden und hiergegen abgedichteten Stange 18 befestigt, die mit ihrem unteren Ende am unteren Federteller 13 der Druckfedereinrichtung 12 befestigt ist. Das aus dem Oberteil 6 herausragende Stück der teleskopartig in das Oberteil 6 eingreifenden Stange 18 durchgreift die Druckfedereinrichtung 12.

In einfachen Fällen können die beiden Kammern 17a, 17b an den voneinander abgewandten Enden jeweils durch einen festen Stirnseitenverschluss abgeschlossen sein. Im dargestellten Beispiel ist die obere Kammer 17a, die im Falle eines Stoßes zunächst verkleinert wird, auf der der Verdrängeranordnung 16 gegenüberliegenden Seite durch einen verschiebbar im Oberteil 6 angeordneten und randseitig hiergegen abgedichteten Kolben 19 verschlossen, der außerhalb der Kammer 17a über eine hier als Spiraldruckfeder ausgebildete Rückstellfedereinrichtung 20 am Aufsatz 11 des Oberteils 6 federnd abgestützt ist. An Stelle einer Spiraldruckfeder könnte natürlich auch eine andere Federart, z.B. eine Luftfeder, vorgesehen sein. Dadurch, dass der obere, also der in Einfahrrichtung des Oberteils 6 hintere Stirnseitenverschluss des die Kammern 17a, b enthaltenden Zylinderrraums entgegen der Kraft der Rückstellfederanordnung 20 beweglich ist, kann die oberhalb der Verdrängeranordnung 16 sich befindende Flüssigkeitsäule im Falle einer Stoßbeanspruchung etwas ausweichen, wodurch sich eine besonders weiche Dämpfung ergibt.

Die oben erwähnte Verdrängeranordnung 16 ist, wie am besten aus Figur 2 erkennbar ist, auf einem Zapfen 21 der Stange 18 aufgenommen und durch eine Schraube 22 gesichert. Die Verdrängeranordnung 16 enthält hier eine aus gummielastischem Material bestehende, scheibenförmige Membrane 23, die zwischen zwei steifen Scheiben 24,25 eingespannt ist. Die Membrane 23 liegt mit ihrem umfangsseitigen Rand an der Innenseite des dem Oberteil 6 zugrundeliegenden Rohrs an. Die Dicke der Membrane kann 0,5 bis 1 mm betragen. Der Durchmesser der Scheiben 24,25 ist kleiner als der Durchmesser der Membrane 23, so dass sich ein die Scheiben 24,25 in radialer Richtung überragender, beweglicher Rand der Membrane 23 ergibt, der durch den hierauf wirkenden Flüssigkeitsdruck ausgelenkt werden kann, wie in Figur 2 durch unterbrochene Linien angedeutet ist. Hierdurch ergibt sich eine spaltförmige Flüssigkeitspassage zwischen den Kammern 17a und 17b, über welche die Flüssigkeit unter Überwindung des Drosselwiderstands des Spalts von der einen Kammer zur anderen gelangen kann.

Die Scheiben 24,25 besitzen im dargestellten Beispiel einen unterschiedlichen Durchmesser, wodurch sich unterschiedliche Breiten des auslenkbaren Randbereichs der Membrane 23 und damit unterschiedliche Auslenkungswiderstände ergeben. Im dargestellten Beispiel ist der Durchmesser der oberen Scheibe 24, das heißt der im Falle einer Stoßbeanspruchung in Einfahrrichtung des Oberteils 6 hinteren Scheibe 24, größer als der Durchmesser der gegenüberliegenden, unteren Scheibe 25. Hierdurch wird erreicht, dass beim Abfangen eines nach unten gerichteten Stoßes eine höhere Stabilität der Membrane 23 und damit eine stärkere Drosselwirkung erreicht werden als bei der Rückstellbewegung, die unter der Wirkung der Druckfedereinrichtung 12 und der Rückstellfedereinrichtung 20 erfolgt. Bei der Anordnung gemäß Figur 2 ergibt sich infolge der Verformbarkeit der Membrane 23 eine gewisse Selbststeuerung der Höhe der Drosselwirkung in Abhängigkeit von den auftretenden Kräften.

Bei der Ausführung gemäß Figur 3 enthält die Verdrängeranordnung 16 einen auf einem Zapfen 21 der Stange 18 aufgenommenen und durch eine Schraube 22 gesicherten, massiven Kolben 26, der gegenüber der Innenwand des dem Oberteil 6 zugrundeliegenden Rohrs durch umlaufende Dichtringe 27 abgedichtet sein kann und der mit als axiale Drosselbohrungen 28 ausgebildeten Durchlässen für die Flüssigkeit versehen ist. Der Durchmesser der Drosselbohrungen 28 ist der gewünschten Drosselwirkung angepasst. Zur Erzielung unterschiedlicher Drosselwirkungen in den beiden Bewegungsrichtungen könnten Rückschlagventile vorgesehen sein.

Vorstehend sind zwar bevorzugte Ausführungsbeispiele der Erfindung anhand der Zeichnung näher erläutert, ohne dass jedoch hiermit eine Beschränkung verbunden sein soll. Vielmehr stehen dem Fachmann eine Reihe von Möglichkeiten zur Verfügung, um den allgemeinen Gedanken der erfindungsgemäßen Lösung an die Verhältnisse des Einzelfalls anzupassen. So wäre es beispielsweise auch denkbar, die Dichtringe 27 der Ausführung gemäß Figur 3 als auslenkbare Membranringe auszubilden. Ebenso wäre es z.B. denkbar, die benötigten Drosseldurchlässe im Bereich der Wandung des dem Oberteil 6 zugrundeliegenden Rohrs vorzusehen.

## Patentansprüche

1. Sattelstütze für Zweiräder, insbesondere Fahrräder, mit einem am Fahrzeugrahmen (3) festlegbaren Unterteil (5) und einem teleskopartig in dieses eingreifenden, einen Sattel (1) tragenden Oberteil (6) das gegenüber dem Unterteil (5) gegen Verdrehen gesichert und in axialer Richtung mittels einer im Unterteil (5) angeordneten Druckfedereinrichtung (12) abgefedert ist, **dadurch gekennzeichnet, dass** wenigstens eine parallel zur Druckfedereinrichtung (12) wirksame Dämpfungseinrichtung (15) vorgesehen ist.

2. Sattelstütze nach Anspruch 1, **dadurch gekennzeichnet, dass** die Dämpfungseinrichtung (15) als Flüssigkeitsverdrängungseinrichtung ausgebildet ist, die einen eine Flüssigkeitsfüllung enthaltenden Zylinderraum und eine diesen in zwei gegenläufig verkleiner- bzw. vergrößerbare Kammern (17a, 17b) unterteilende Verdrängeranordnung (16) aufweist, der wenigstens eine Drosselverbindung zwischen den beiden Kammern (17a, 17b) zugeordnet ist.

3. Sattelstütze nach einem der vorhergehenden Ansprüche, **dadurch gekennzeichnet, dass** die Dämpfungseinrichtung (15) innerhalb der aus Unterteil (5) und Oberteil (6) bestehenden Teleskopanordnung angeordnet ist.

4. Sattelstütze nach einem der vorhergehenden Ansprüche, **dadurch gekennzeichnet, dass** der eine Flüssigkeitsfüllung enthaltende Zylinderraum im Oberteil (6) angeordnet ist und dass die Verdrängeranordnung (16) an einer am Unterteil (5) befestigten, teleskopartig in das Oberteil (6) eingreifenden Stange (18) aufgenommen ist.

5. Sattelstütze nach Anspruch 4, **dadurch gekennzeichnet, dass** die Stange (18) an einer verstellbar im Unterteil (5) angeordneten, unteren Abstützung (13) der Druckfedereinrichtung (12) befestigt ist.

6. Sattelstütze nach einem der vorhergehenden Ansprüche 2 bis 5, **dadurch gekennzeichnet, dass** der der Verdrängeranordnung (16) gegenüberliegende Stirnseitenverschluss der im Falle einer Stoßbeanspruchung verkleinerbaren Kammer (17a) als entgegen der Kraft einer Rückstellfedereinrichtung (20) verschiebbarer Kolben (19) ausgebildet ist.

7. Sattelstütze nach einem der vorhergehenden Ansprüche, **dadurch gekennzeichnet, dass** die Verdrängeranordnung (15) einen mit Drosselausnehmungen (28) versehenen, massiven Kolben (26) aufweist.

8. Sattelstütze nach einem der vorhergehenden Ansprüche 1 bis 6, **dadurch gekennzeichnet, dass** die Verdrängeranordnung (15) wenigstens eine aus gummielastischem Material bestehende, scheibenförmige Membrane (23) aufweist.

9. Sattelstütze nach Anspruch 8, **dadurch gekennzeichnet, dass** die Membrane (23) zwischen zwei steifen Scheiben (24, 25) eingespannt ist und einen diese in radialer Richtung überragenden Rand aufweist.

10. Sattelstütze nach Anspruch 9, **dadurch gekennzeichnet, dass** die der im Falle einer Stoßbeanspruchung verkleinerbaren Kammer (27) zugewandte Scheibe (24) einen größeren Durchmesser aufweist als die gegenüberliegende Scheibe (25)
